# EUROPÄISCHE PATENTANMELDUNG

(11) **EP 1 323 343 A1**
(43) Veröffentlichungstag der Anmeldung: **02.07.2003**
(21) Anmeldenummer: 02028209.1
(22) Anmeldetag: 14.12.2002
(51) Int. Cl.: A01F 15/10, A01D 90/02

(54) **Abstreifer für Erntegut und Erntebergungsmaschine**

(30) Priorität: 26.12.2001 US 25944
(71) Anmelder: DEERE & COMPANY, Moline, Illinois 61265-8098 (US)
(72) Erfinder: Anstey, Henry Dennis, Ottumwa, IA 52501 (US)
(74) Vertreter: Magin, Ludwig Bernhard

(57) **Zusammenfassung**

Ein Rotationsförderer 14 enthält eine Anzahl flacher Zinken 26, 28, die an eine Welle 46 angebracht sind, wobei jeder Zinken 26, 28 eine gebogene Vorderkante 30 aufweist. An den gegenüberliegenden Seiten jedes flachen Zinkens 26, 28 befindet sich ein Abstreifer 16 mit stromauf- und stromabwärts gelegenen Segmenten 34, 36, 36', deren vordere Endbereich sich etwa bei der Welle 46 befinden. Das untere, stromabwärts gelegene Segment 36, 36' ist so geformt, dass es einen Zwischenraum unter den flachen Seitenflächen 52 des oberen Segments 34 bildet und/oder eine Abstreiferkante 70 an jeder Seite ausbildet, die sich im vorderen Bereich des Zwischenraums befindet und Erntegut, das von dem benachbarten Zinken 26, 28 in den Zwischenraum befördert wird, abstreift, so dass dieses herausfällt.

## Beschreibung

Die vorliegende Erfindung betrifft einen Abstreifer für Erntegut zur Aufnahme auf einer Zinken tragenden drehbaren Welle, mit wenigstens einer Seitenfläche, und eine Erntebergungsmaschine.

Bekannte Rotationsförderer (US B1 6 314 708) enthalten eine Anzahl plattenartiger Zähne oder Zinken, die auf einer Rotorwelle axial angeordnet und diametral entgegengesetzt paarweise montiert sind. Zwischen jeweils benachbarten Zahnpaaren befindet sich ein stationärer, gebogener Abstreifer oder Heber, wobei benachbarte Abstreifer jeweils ein bestimmtes Zahnpaar zwischen sich einschließen und so wirken, dass sie Erntegut von der gebogenen Vorderkante oder -fläche der Zinken abstreifen oder abheben.

Das mit diesem Stand der Technik einhergehende Problem wird darin gesehen, dass es zu Wickelproblemen an der Welle kommen kann, wenn das Erntegut schlaff oder klebrig ist es und sich dann um die Vorderkanten der Zähne legt, daran aufgegabelt wird und/oder daran klebt.

Dieses Problem wird erfindungsgemäß durch die Lehre des Patentanspruchs 1 gelöst, wobei in den weiteren Patenansprüchen Merkmale aufgeführt sind, welche die Lösung in vorteilhafter Weise weiter entwickeln.

Auf diese Weise entsteht stromabwärts des Abstreifers ein Freiraum, in den das evtl. mitgenommene Erntegut eintreten und sich entfernen kann. Es wird folglich nicht weiter mitgenommen und führt auch nicht zu Verstopfungen, Wickelproblemen, usw.

Die Verwendung einer Abstreiferkante ist dort sehr hilfreich, wo z. B. bei Silage das Erntegut an den Zinken klebt und sich nicht von selbst lösen kann. Insbesondere bei längerem Stillstand des Rotors wird somit nach dem Anlaufen für saubere Zinken gesorgt.

Da das Verhalten von Erntegut sehr unterschiedlich und nicht vorberechenbar ist, kann es auch vorkommen, dass es bis dem Lagerbereich der Welle in dem Abstreifer gelangt. Sollte dies der Fall sein, wird es an den Kanten einer vorgesehenen und in dieser Anwendung bereits für sich alleine eine Erfindung darstellende Kerbe aufgetrennt und von dem Lagerbereich weggeführt.

Ein Abstreifer kann grundsätzlich beliebig aufgebaut sein, z. B. auch einstückig, und axial auf die Welle aufgeschoben werden. Insbesondere dann, wenn jedoch eine Kurbelwelle verwendet wird, macht es Sinn, den Abstreifer aus wenigstens zwei Segmenten zu bilden, die jeweils eine z. B. halbkreisförmige Ausnehmung aufweisen, die zusammengeschraubt eine Lagerhülse ergeben, in der die Welle drehbar aufgenommen werden kann. Allerdings ist die Form eines Halbkreises nicht erforderlich; es kann auch nur ein Kreisbogensegment und Stege zwischen den Segmenten vorgesehen werden. Auch ist es möglich, separate Lagerschalen zu verwenden, die in die Segmente eingesetzt oder an diese angeschraubt werden.

Eine ovale Form des stromaufwärts gelegenen Segments, wenn man es von der Seite und auf die Förderebene gerichtet betrachtet, bewirkt, dass die Zinken stets an den Kanten der parallel angeordneten, beabstandeten und flachen Seitenflächen z. B. im rechten Winkel verlaufen, so dass das mitgenommene Erntegut leicht abgestreift wird und nicht klemmt.

Eine Querwand an dem stromabwärts gelegenen Segment, die im allgemeinen senkrecht zur Ebene zwischen den beiden Segmenten verläuft und vorzugsweise nahe der Ausnehmung, in der die Welle aufgenommen ist, gelegen ist, kann leicht als Abstreifer ausgebildet werden und dient dazu auch der Versteifung des unteren Segments.

Der Abstreifeffekt an der Querwand wird noch erhöht, wenn sie in einer relativ scharfen an den Seitenflächen endenden Abstreiferkante ausläuft.

Die Verbindung beider Segment ist in sich steif und umfasst die Welle sicher, wenn das stromabwärts gelegene Segment eine rechteckige Basis aufweist, die bündig mit den Seitenflächen des stromaufwärts gelegenen Segments endet und Seitenflächen aufweist, die an der Basis angreifen.

Die Verwendung der erfindungsgemäßen Abstreifer an einer Erntebergungsmaschine, z. B. an einer Rundballenpresse, Großballenpresse, Ladewagen, Feldhäcksler ist besonders günstig, weil aufgenommenes Erntegut leicht an den Zinken einer Welle hängenbleibt und beträchtliche Schäden anrichten kann.

In der Zeichnung ist ein nachfolgend näher beschriebenes Ausführungsbeispiel der Erfindung dargestellt. Es zeigt:
- Fig. 1: ist eine Perspektivdarstellung des rechten Endstücks eines Erntesammlers mit einer breiten Aufnahme sowie einem Rotationsförderer mit Abstreifern, die nach der vorliegenden Erfindung ausgeführt sind, von vorn links oben.
- Fig. 2: ist ein Aufriss der linken Seite des in Abb. 1 dargestellten Erntesammlers.
- Fig. 3: ist eine Perspektivdarstellung eines der Abstreifer in Abb. 1 von links unten.
- Fig. 4: ist eine Ansicht einer Alternativausführung mit einem verengten hinteren Endstück für die zusätzliche Ablösung, so dass das Erntegut herausfallen kann, von rechts unten.

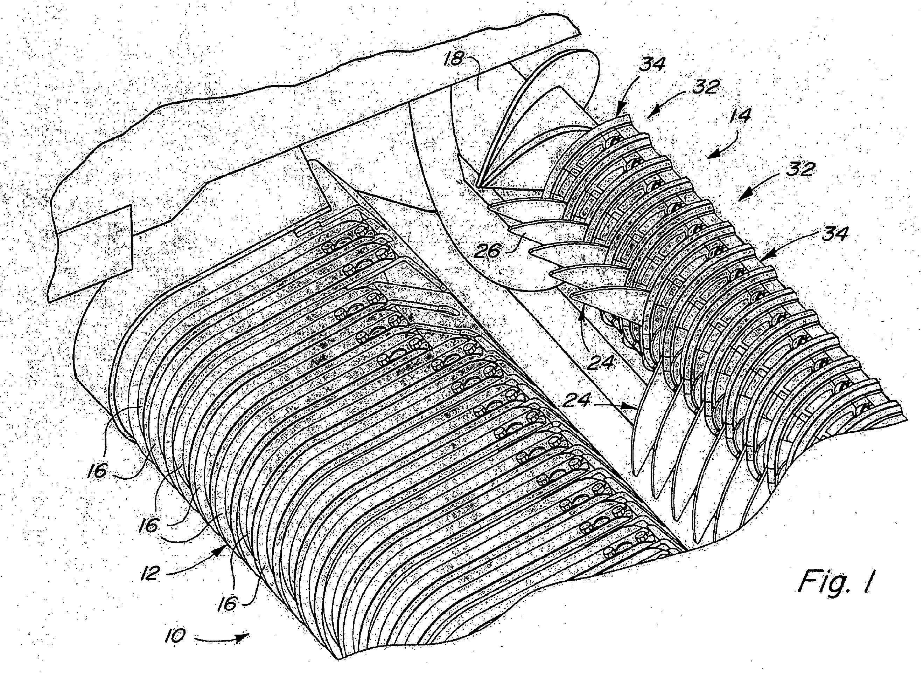

In Fig. 1 ist ein Erntesammler oder Ernteaufnehmer 10 dargestellt, der beispielsweise als Teil auf einer Ballenpresse für die Herstellung großer zylindrischer Ballen benutzt wird. Der Erntesammler 10 enthält einen Aufnehmer 12 in herkömmlicher Bauart, mit einer Vielzahl nebeneinander angeordneter Federzahnzinken (nicht dargestellt) in winkelförmig nebeneinander angeordneten Gruppen, die sich um eine Querachse drehen, um so ein Schwad Erntegut vom Boden anzuheben und zu einem Rotationsförderer 14 befördern, der das Erntegut wiederum an einen Eingang einer Pressenkammer transportiert. Eine Vielzahl quer angeordneter, U-förmiger Abstreifer 16 ist so ausgeführt, dass die einzelnen Zinkengruppen zwischen ihnen hindurch gelangen, wobei horizontale Abstreiferteile das Erntegut von den Zinken abstreifen.

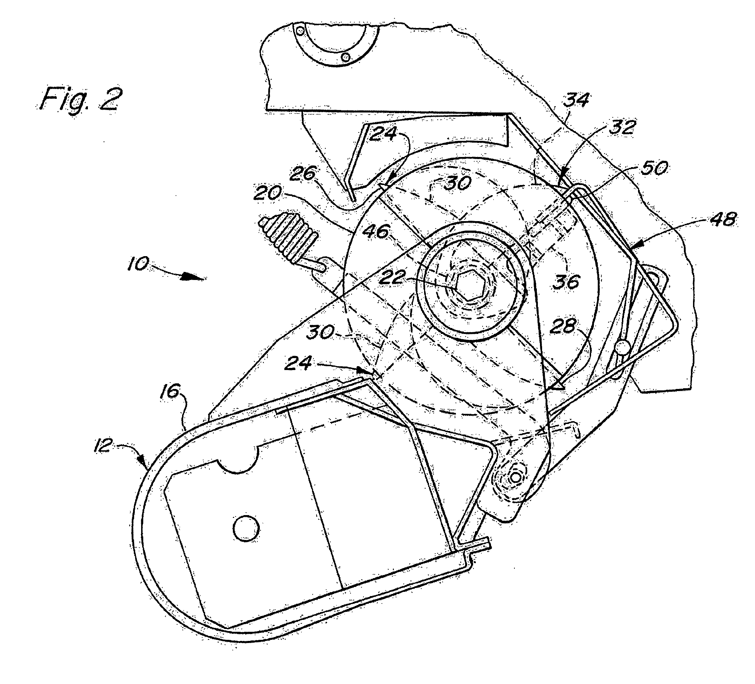

Der Rotationsförderer 14 ist mit rechten und linken zur Mitte fördernden Schnecken 18 (Fig. 1) bzw. 20 (Fig. 2) für das Erntegut versehen, die an einer durchgehenden sechskantigen Welle 22 für die Überkopfdrehung befestigt sind und den Strom des Ernteguts verengen, beispielsweise auf die Breite der Pressenkammer. Ebenfalls in Fig. 2 ist zu erkennen, dass eine Vielzahl quer angeordneter, starrer Zinken 24 zwischen den Schnecken 18 und 20 auf der Welle 22 montiert sind. Jeder Zinken 24 ist in Form einer flachen Platte so ausgeführt, dass jeweils ein Paar diametral entgegengesetzter Zinken 26 und 28 gebogene Vorderkanten 30 aufweist. Eine Vielzahl von Abstreifern 32 für die Zinken ist jeweils nebeneinander so angebracht, dass sie Zwischenräume für den Durchgang der Zinken 26 und 28 der jeweiligen Zinkensätze 24 während der Drehung der Welle 22 bilden.

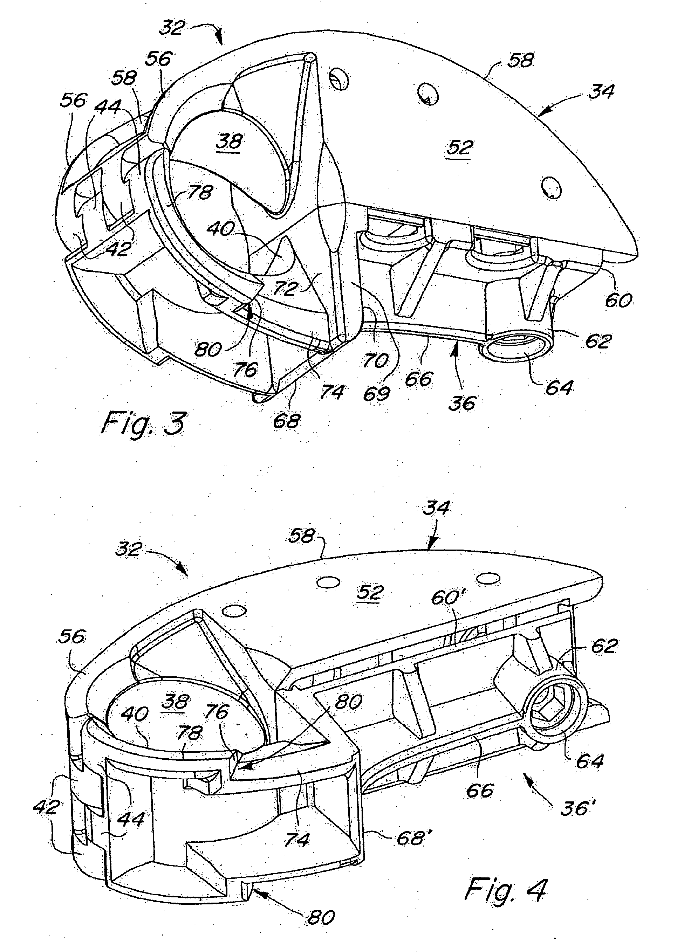

Die Abstreifer 32 bestehen je aus einer oberen und einer unteren Hälfte bzw. Segments 34 und 36, die vorzugsweise als Guss- oder Spritzteile aus Polyethylen mit extrem hohem Molekulargewicht (UMHW-PE) ausgeführt sind, das eine hohe Verschleißtoleranz aufweist. In Fig. 3 ist zu sehen, dass jeweils halbzylindrische Vertiefungen 38 und 40 in die vorderen Endbereiche der Segmente 34 und 36 eingegossen sind, wobei die vorderen Enden der Segmente 34 und 36 jeweils paarweise angeordnete Laschen oder Ansätze 42 und 44 aufweisen, die ineinander eingreifen und so eine Gelenkverbindung zwischen den Segmenten 34, 36 bilden. Wie in Fig. 2 am besten zu erkennen ist, sind die Segmente 34, 36 zusammen mit den zylindrischen Vertiefungen 38, 40 an ihren vorderen Enden um eine röhrenförmige, zylindrische Welle 46 zum Tragen der Zinken 26, 28 montiert, an die die plattenförmigen Sätze von Zinken 24 angeschweißt sind, wobei die Welle 46 wie bei den herkömmlichen Platten (hier nicht dargestellt) drehend mit der antreibenden Welle 22 verbunden ist. Ein Abstreiferträger 48 erstreckt sich quer hinter dem Rotationsförderer 14 und hat ein oberes Ende, das in einer Vielzahl quer angeordneter Laschen mit nach unten und vorn geneigten Halterungen 50 endet, die sich etwa auf halbem Weg zwischen der Zwei- und Drei-Uhr-Stellung um die Welle 46 befindet. Jede Halterung 50 befindet sich in einem Schlitz, der im hinteren Bereich eines der Abstreifer 32 von den oberen und unteren Segmente 34 und 36 gebildet wird, und weist eine Bohrung für eine Montageschraube (nicht sichtbar) auf, die sich durch Bohrungen in jedem der beiden Segmente 34, 36 erstreckt, wobei eine Mutter an einem Gewindeende der Schraube die Segmente 34 und 36 festklemmt und an der Halterung 50 sichert.

In Fig. 3 ist zu sehen, dass das obere Segment 34 jedes Abstreifers 32 ein Paar in Querrichtung beabstandeter flacher Seitenflächen 52 aufweist, die sich senkrecht zur Achse der Welle 46 erstrecken und in gebogenen Randelementen enden, die einen kleineren, vorderen Teil 56 in einem Radius um die Mitte der halbzylindrischen Vertiefung 38 aufweisen, der mit einem größeren rückwärtigen Teil 58 verbunden ist, welcher mit einem festen Radius um eine Achse unterhalb des oberen Segmentes 34 hinter der halbzylindrischen Vertiefung 38 ausgeführt ist. Die Abstreifer 32 sind zu den Sätzen 24 vorn so angeordnet, dass, wenn ein bestimmter Satz Zinken 24 über die größeren Teile 58 benachbarter Abstreifer 32 streicht, ständig etwa ein rechter Winkel zwischen dem Rand des Teils 58 und der gebogenen Vorderkante 30 jedes der Zinken 26 und 28 des Satz Zinken 24 des Rotationsförderers 14 gebildet wird. Durch diese Ausrichtung der Vorderkanten 30 zu den Teilen 58 wird das Erntegut von den Zinken 26 und 28 abgehoben.

Das untere Segment 36 hat einen ganz anderen Aufbau als das obere Segment 34, damit Pflanzenstengel, die an der Vorderkante 30 der Zinken 26 und 28 aufgespießt sind und/oder daran kleben, nicht so weit gefördert werden, dass sie sich um die Welle 46 wickeln können. Insbesondere besitzt das untere Segment 36 keine in bestimmten Abständen angeordneten Seitenwände wie die Seitenwände 52 des oberen Segmentes 30, sondern hat nur eine flache Basis 60 mit der gleichen Breite wie das obere Segment 34 und eine ebene Fläche, die in deren Unterseite eingreift. Hinten in der Mitte ist an der Basis 60 ein zylindrischer Ansatz 62 mit einer durchgehenden Montagebohrung 64 angebracht, die passend zur Montagebohrung in dem oberen Segment 34 ausgerichtet ist, um die Schraube für die Montage des Abstreifers 32 an der Halterung 50 aufzunehmen. Eine mittige von vorn nach hinten verlaufende Rippe 66, die an der Basis 60 angebracht ist, ist mit einem Ansatz 62 und einer Querwand 68 vorn an der Basis 60 verbunden. Die Querwand 68 hat gegenüberliegende ebene Seitenflächen 69 und parallele Vorder- und Hinterflächen, die senkrecht zur Basis 60 verlaufen. Die rückwärtige Oberfläche der Querwand 68 bildet gegenüberliegende Abstreifersegmente, die zu das Erntegut aufnehmenden Zwischenräumen auf den gegenüberliegenden Seiten der Rippe 66 weisen und mit den Seitenflächen 69 zusammen jeweils relativ scharfe Abstreiferkanten 70 bilden, die senkrecht zur Basis 60 verlaufen. Die Vorderseite der Querwand 68 ist eine nach vorn zeigende Stufenfläche 72. Die Abstreiferkanten 70 dienen zum Abscheren und/oder Abstreifen von Erntegut, das von den Zinken 26 und 28 hinter die Teile 58 benachbarter Abstreifer 32 transportiert wird, um das Erntegut von der Welle 46 weg zu halten. Beginnend an einem äußeren Endbereich jeder Stufenfläche 72 liegt relativ zur Basis 60 und nach innen zur halbzylindrischen Vertiefung 40 gebogen ein erster nach außen zeigender Flächenteil 74, dessen vorderes Ende an einer inneren Kante oder Basis einer nach hinten zeigenden, axial verlaufenden Zwischenfläche 76 endet, deren äußeres Ende mit einem zweiten nach außen zeigenden Flächenteil 78 verbunden ist, der auf einem Radius um die Achse der halbzylindrischen Vertiefung 40 gebogen ist. So wird von dem ersten Flächenteil mit der Zwischenfläche 76 eine Kerbe 80 gebildet, die Erntegut, das in den Schweißbereich der Sätze der Zinken 24 gelangt und von der drehenden Zinkenwelle 46 hinter die Kerbe 80 befördert wird, abkratzt und entsorgt, so dass sich das Erntegut nicht mehr fest um die Welle 46 wickeln kann. Es versteht sich, dass die Kerben 80 jeweils auch ebenso von einer ersten Fläche, die von der benachbarten äußeren Endfläche 69 der Querwand 68 nach innen zur Zwischenfläche 76 geneigt ist, gebildet werden können.

In Fig. 4 ist eine zweite Ausführung des unteren Segmentes, hier mit Ziffer 36' bezeichnet, gezeigt, die sich von dem oberen Segment 36 nur dadurch unterscheidet, dass ihre Basis 60' schmäler ist als die Basis 60, dass sie keine Kanten mehr besitzt, die wie bei den Abstreiferkanten einen Abstreifvorgang bewirken, da sich die schmälere Ausführung der Basis 60' durch die Querwand 68 fortsetzt, so dass die rückwärtigen Kanten der Enden der Querwand 68' zu weit vom Rotationsweg der flachen Zinken 26, 28 entfernt sind. Da die Basis 60' schmäler als die Basis 60 des oben beschriebenen Segmentes 36 ist, vergrößert sich der Zwischenraum zwischen den gegenüberliegenden Seitenflächen 52 des oberen Segmentes 34 um die Differenz der Breiten der Basen 60 und 60'. Der restliche Aufbau ist der gleiche wie bei dem unteren Segment 36 und trägt die gleichen Bezugsziffern.

Beim Betrieb des Rotationsförderers 14 können solche Gutzustände vorkommen, dass sich Teile des Ernteguts, vor allem wenn es feucht, dünnstengelig und klebrig ist, um die Vorderkanten 30 der Zinken 26 und 28 wickeln, biegen, haken oder daran aufgespießt werden. Diese Teile des Ernteguts werden bis hinter die rückwärtigen Teile 58 der Seitenwände 52 benachbarter Abstreifer 32 befördert. Wenn sich die Zinken 26 und 28 unter den oberen Segmenten 34 und die Basis 60 der unteren Segmente 36 drehen, gelangen sie in den großen Zwischenraum zwischen den gegenüberliegenden Seiten der Basis 60 und der Rippe 66 jedes Segmentes 36, in die die Pflanzenteile, die der Welle 46 am nächsten sind, hineinfallen, wenn sie von den Abstreiferkanten 70 erfasst und von den Zinken 26 und 28 abgestreift werden. Geraten Pflanzenteile über die Absteiferkanten 70 hinaus und beginnen sie, sich mit der Welle 46 zu drehen, so werden sie durch die Kerben 80 von der Welle 46 abgekratzt und entfernt. Man kann somit feststellen, dass durch die Funktion der unteren Segmente 36 Pflanzenteile entweder gar nicht zur Basis der Zinken 26 und 28 gelangen können, wo sie sich um die Welle 46 wickeln könnten, und/oder von der Welle 46 abgekratzt werden, bevor sie sich fest darum wickeln können. Versuche haben gezeigt, dass je nach den Erntebedingungen ein unteres Segment, das entweder nur die Kerben 80 oder nur den großen Zwischenraum unter den Wänden 52 des oberen Segmentes 34 aufweist, ausreicht, um das Aufwickeln von Erntegut um die Welle 46 zu verhindern. Bei bestimmten Erntebedingungen hat sich ferner gezeigt, dass die in Fig. 4 gezeigte Ausführung des unteren Segmentes 36' mit einem größeren Zwischenraum benötigt wird, damit ausreichend Platz für das Entfernen des Ernteguts von der Welle 46 vorhanden ist.

Aus der Beschreibung der bevorzugten Ausführung ergibt sich, dass verschiedene Varianten möglich sind, ohne den Rahmen der Erfindung, wie sie in den beigefügten Patentansprüchen beschrieben ist, zu verlassen.

## Patentansprüche

1. Abstreifer (16) für Erntegut zur Aufnahme auf einer Zinken (26, 28) tragenden drehbaren Welle (46), mit wenigstens einer Seitenfläche (52), **dadurch gekennzeichnet, dass** ein stromabwärts der Seitenfläche 52 gelegener Bereich des Abstreifers (16) schmaler ausgebildet ist als ein stromaufwärts liegender.

2. Abstreifer nach Anspruch 1, **dadurch gekennzeichnet, dass** stromabwärts des schmaleren Bereichs wenigstens eine zu den Seitenflächen (52) reichende Abstreiferkante (70) vorgesehen ist.

3. Abstreifer nach Anspruch 1 oder 2, **dadurch gekennzeichnet, dass** stromabwärts der Abstreiferkante (70) wenigstens eine Kerbe (80) nahe einer Ausnehmung (38, 40) zur Aufnahme der Welle (46) vorgesehen sind, die je eine entgegen der Vorwärtsdrehrichtung der Welle (46) angeordnete axiale Fläche (76) aufweist.

4. Abstreifer nach einem oder mehreren der vorherigen Ansprüche, **dadurch gekennzeichnet, dass** er aus wenigstens zwei Segmenten (34, 36, 36') besteht, die in einer die Ausnehmung (38, 40) wenigstens ungefähr mittig schneidenden Ebene zusammenfügbar sind.

5. Abstreifer nach einem oder mehreren der vorherigen Ansprüche, **dadurch gekennzeichnet, dass** das stromaufwärts gelegene Segment (34) von der Seite betrachtet eine halbovale Form und ein Paar parallel angeordneter beabstandeter flacher Seitenflächen (52) mit gebogenen Rändern aufweist.

6. Abstreifer nach einem oder mehreren der vorherigen Ansprüche, **dadurch gekennzeichnet, dass** das stromabwärts gelegene Segment (36, 36') eine Querwand (68) aufweist, die im allgemeinen senkrecht zur besagten Ebene verläuft und vorzugsweise nahe der Ausnehmung (38, 40) gelegen ist.

7. Abstreifer nach einem oder mehreren der vorherigen Ansprüche, **dadurch gekennzeichnet, dass** die Querwand (68) in einer relativ scharfen an den Seitenflächen (52) endenden Abstreiferkante (70) ausläuft.

8. Abstreifer nach einem oder mehreren der vorherigen Ansprüche, **dadurch gekennzeichnet, dass** das stromabwärts gelegene Segment (36) eine rechteckige Basis (60) aufweist, die bündig mit den Seitenflächen (52) des stromaufwärts gelegenen Segments (34) endet und Seitenflächen (69) aufweist, die an der Basis (60) angreifen.

9. Erntebergungsmaschine, insbesondere Presse, mit einem Gutaufnehmer (10), der eine Welle (46) mit darauf befestigten Zinken (26, 28) enthält, zwischen denen Abstreifer (16) nach einem oder mehreren der vorherigen Ansprüche vorgesehen sind.
